# EUROPEAN PATENT SPECIFICATION

(11) **EP 1 806 647 B1**
(45) Date of publication and mention of the grant of the patent: **11.11.2015**
(21) Application number: 06125669.9
(22) Date of filing: 08.12.2006
(51) Int. Cl.: G06F 3/046, G06F 3/033, H02J 7/02

(54) **Position input device and computer system**
Positionseingabegerät und Computersystem
Dispositif de saisie de position et système informatique

(30) Priority: 12.12.2005 JP 2005357965
(43) Date of publication of application: 11.07.2007
(73) Proprietor: Wacom Co., Ltd., Saitama 349-1148 (JP)
(72) Inventor: Katsurahira, Yuji, Saitama 347-0016 (JP); Matsubara, Masaki, Meguro-ku, Tokyo-to 153-0061 (JP)
(74) Representative: Richardt Patentanwälte PartG mbB

(56) References cited:
- EP-A1- 1 513 241
- WO-A2-2006/059336
- JP-A- 3 183 321
- US-B1- 6 628 271
- US-B1- 6 633 155

## Description

### CROSS-REFERENCES TO RELATED APPLICATIONS

The present application claims priority from Japanese Application No. P2005-357965, filed on December 12, 2005.

### BACKGROUND OF THE INVENTION

### Field of the Invention

This invention relates to a position input device which detects positions by transmitting and receiving signals between a position indicator and a position detection device, and to a computer system comprising this position input device.

### Description of the Related Art

In the prior art, position input devices (so-called pen tablets), comprising a pen-type position indicator and a position detection device which detects the position indicated by this position indicator, are well-known. In such position input devices, generally signals transmitted from the position indicator are received by the position detection device to detect the position indicated by the position indicator.

In recent years, position input devices have appeared which are integrated with a liquid crystal display device, and which enable operation of the position indicator on the display screen. Generally in such position input devices, electric waves are transmitted to the position indicator from the position detector device provided on the display screen, and these electric waves are utilized to transmit signals from the position indicator. In such a position input device, because the signals transmitted from the position indicator to the position detection device are comparatively weak, there is the danger of a decline in the sensitivity and precision of position detector in an environment of intense electromagnetic noise due to the liquid crystal display device or other causes. As a countermeasure, in devices of the prior art, methods such as strengthening the signals transmitted from the position detector device have been adopted; but when such methods are used, there is the problem that power consumption in the position detector device is increased.

There have also been methods in which a battery is incorporated into the position indicator, so that transmission of signals from the position detector device becomes unnecessary. Using such a method, strong signals can be transmitted from the position indicator even with low power consumption.

WO 2006/059336 A2, which is filed earlier but published later than this patent application, discloses a position detecting system provided with an electrical capacitor for providing power for position transmission means.

US 6 633 155 B1 is related to an induction power supply for a wireless mouse. the system comprises power supply means for charging an internal rechargeable power supply.

### SUMMARY OF THE INVENTION

However, in the case of the above-described position indicator there is the problem that time and trouble must be taken to replace batteries; in particular, if the intensity of signals transmitted from the position indicator is to be increased, power consumption is increased and battery depletion occurs in a short length of time, so that batteries must be replaced frequently, causing further inconvenience. In addition, the weight of a position indicator incorporating a battery is increased significantly, and there is the further problem that operating properties are severely degraded.

This invention was devised in light of the above circumstances, and has as an object the provision of a position input device capable of stable position detection without readily being affected by external noise even under low power consumption, and which comprises a position indicator which is lightweight and does not require battery replacement tasks, as well as a computer system to which this position input device is applied.

Accordingly, the invention provides a position indicator, a position detector device, such as a tablet, a position input device, and a computer system for processing position information.

In accordance with an embodiment of the invention, a position input device is provided, which transmits signals from a position indicator and receives signals transmitted from the position indicator by a position detector device, is characterized in that within the position indicator are provided an electrical double-layer capacitor, a charging circuit to charge the electrical double-layer capacitor, and a power transmission unit to relay and supply the charging circuit with power supplied from a power supply unit external to the position indicator.

By means of this configuration, signals can be transmitted using as a power supply an electrical double-layer capacitor provided in the position indicator, so that there is greater freedom with respect to power consumption for signal transmission. For example, compared with a case in which power is supplied to the position indicator by transmitting signals to the position indicator from the position detector device, signals transmitted from the position indicator can be more reliably detected by the position detector device even at extremely low power consumption, and power consumption by the position detector device can be greatly reduced. As a result, signals are transmitted reliably from the position indicator to the position detector device with low power consumption and without easily being affected by external noise, and strong signals can be reliably received within the position detector device, so that the position indicated by the position indicator can be detected.

Further, by using an electrical double-layer capacitor, charging in a short time is possible, and a position indicator with the advantages of light weight and compactness can be realized. That is, the position indicator in a position input device of this invention differs from a position indicator incorporating a primary battery in that no time and trouble for battery replacement is required, and because charging is possible in an extremely short time, there is no inconvenience arising from an inability to use the position indicator until charging is complete. The light weight also affords excellent operating properties.

Further, in this invention the power supply unit may also be comprised. In this case, the position input device comprises the power supply unit, so that charging of the electrical double-layer capacitor can easily be performed, and usability can be enhanced.

Further, a configuration may be employed in which a coil is provided in the position indicator, and an AC magnetic field generation unit is provided as the power supply unit. In this case, by using the AC magnetic field generation unit to generate a magnetic field, an induced current flows in the coil, and by means of this current the electrical double-layer capacitor can be charged. Power can be supplied through this magnetic field without requiring contact, so that freedom of design of the position indicator is enhanced, and the durability of the position indicator and the power supply unit can be improved.

Further, a configuration may be employed in which, as the power supply unit, the AC magnetic field generation unit is provided in a stand in which the position indicator can be set. In this case, by setting the position indicator in the stand the electrical double-layer capacitor can be charged, so that operation related to charging becomes extremely simple, and operability can be improved.

Further, a configuration may be employed in which a power supply assistance unit, which receives power from the electrical double-layer capacitor and supplies a prescribed voltage, is provided in the position indicator. The voltage across the terminals of the electrical double-layer capacitor is high immediately after charging, and is expected to decline as power is consumed; by means of this invention, a precribed voltage is supplied by the power supply assistance unit based on the power of the electrical double-layer capacitor, so that when various circuitry is incorporated into the position indicator, stable operation of the circuitry can be secured.

Further, the position detector device may be a device which detects signals transmitted from the position indicator based on the static coupled state with the position indicator. Moreover, the position detector device may be a device which detects signals transmitted from the position indicator based on electromagnetic coupling with the position indicator. Further, the position indicator may employ a configuration comprising a resonance circuit formed using a coil and a capacitor.

Further, a configuration may be employed in which the position indicator is provided with a voltage detection unit, which detects the fact that the voltage of the electrical double-layer capacitor has fallen to or below a prescribed voltage value, and an information transmission unit which transmits information indicating detection by the voltage detection unit of the fallen voltage to the position detector device.

In this case, when the voltage of the electrical double-layer capacitor has fallen, by transmitting information to the position detector device, the fact that charging is necessary can be detected in the position detector device.

A computer system of this invention, comprising a position input device which transmits signals from a position indicator and receives signals transmitted from the position indicator by a position detector device, a display device which displays screens, and a computer which performs processing based on positions detected by the position input device, is characterized in comprising, within the position indicator, an electrical double-layer capacitor, a charging circuit which charges the electrical double-layer capacitor, a power transmission unit which relays and supplies the charging circuit with power supplied from a power supply unit external to the position indicator, a voltage detection unit which detects the fact that the voltage of the electrical double-layer capacitor has fallen to or below a prescribed voltage value, and an information transmission unit which transmits to the position detector device information indicating detection by the voltage detection unit of the fallen voltage.

By means of this configuration, signals can be transmitted using as a power supply the electrical double-layer capacitor provided in the position indicator, so that there is greater freedom with respect to power consumption for signal transmission, and while greatly reducing power consumption by the position detector device, a computer system can be realized which is capable of safely detecting operations using the position indicator, without easily being affected by external noise. In this computer system, the time and trouble to replace a battery in the position indicator is unnecessary, and moreover by using the electrical double-layer capacitor, the position indicator can be charged in an extremely short time, and moreover the position indicator can be made lightweight, for excellent operability.

In addition, by means of the configuration of this invention, the fact that charging of the position indicator is necessary can be detected in the position detector device when the voltage of the electrical double-layer capacitor in the position indicator has fallen, so that processing in response to the state of the position indicator can be performed.

Here, a configuration is employed comprising an AC magnetic field generation unit as the power supply unit, and with a coil provided in the position indicator; the computer uses the position detector device to receive information transmitted by the information transmission unit provided in the position indicator, and when, based on this information, it is judged that the electrical double-layer capacitor must be charged, supplies current to the AC magnetic field generation unit.

In this case, current is supplied to the AC magnetic field generation unit which charges the electrical double-layer capacitor of the position indicator according to the drop in the voltage of the electrical double-layer capacitor, so that power consumption can be rendered efficient without providing current unnecessarily to the AC magnetic field generation unit, and in addition charging can be performed rapidly when necessary.

Further, the computer uses the position detector device to receive information transmitted from the information transmission unit provided in the position indicator, and when, based on this information, it is judged that the electrical double-layer capacitor must be charged, causes a report screen to be displayed by the display device.

In this case, the fact that charging of the position indicator is necessary is reported to the user, and so the user views the report screen and performs charging; thus the user can concentrate on operation of the device without paying special consideration to the timing of charging, for greater convenience to the user.

A configuration may be employed comprising an AC magnetic field generation unit as the power supply unit, with a coil provided in the position indicator, and in which, after a prescribed time has elapsed from the previous supply of current to the AC magnetic field generation unit, the computer causes current to be supplied to the AC magnetic field generation unit.

In this case, after supplying current to the AC magnetic field generation unit current is again supplied to the AC magnetic field generation unit with a timing which anticipates a drop in the voltage of the electrical double-layer capacitor, so that power consumption can be rendered efficient, without unnecessary supply of current to the AC magnetic field generation unit, and in addition charging can be performed rapidly when necessary. Further, current can be supplied to the AC magnetic field generation unit with appropriate timing without performing complex processing, enabling transition to the charged state.

Further, a configuration may be employed comprising an AC magnetic field generation unit as the power supply unit, with a coil provided in the position indicator, and in which, during the interval before a prescribed time has elapsed from the previous supply of current to the AC magnetic field generation unit, information transmitted from the information transmission unit provided in the position indicator has not been received by the position detector device, the computer causes current to be supplied to the AC magnetic field generation unit.

In this case, current is supplied to the AC magnetic field generation unit with a timing which anticipates a drop in the voltage of the electrical double-layer capacitor, without waiting for transmission of information from the position indicator, so that even when for example the voltage across the electrical double-layer capacitor drops sharply and the above information cannot be transmitted, charging can be performed rapidly when necessary.

According to this invention, an electrical double-layer capacitor is comprised as a power supply of the position indicator, so that there is no need to supply power to the position indicator from the position detector device, and so strong signals can be received from the position indicator by the position detector device with low power consumption and without easily being affected by external noise. Further, no time or trouble need be taken to replace batteries in the position indicator, and charging can be performed in an extremely short time; moreover, the electrical double-layer capacitor is lighter than ordinary batteries while affording high capacity, so that there are the advantages of light weight and excellent operability. As a result, a position input device comprising a position indicator with light weight and excellent operability, as well as a computer system comprising this position input device, can be realized.

### BRIEF DESCRIPTION OF THE DRAWINGS

FIG. 1 shows in summary the configuration of the computer system of a first aspect to which the invention is applied;
FIG. 2 is an oblique view showing the configuration of a position indicator;
FIG. 3 shows the configuration of an internal circuit incorporated in a position indicator;
FIG. 4 shows the configuration of an internal circuit incorporated in a tablet;
FIG. 5 is a timing chart showing transmission operation by a position indicator, in which (A) indicates the output from terminal P0 of a controller, (B) is the voltage across the terminals of a resonance circuit, (C) shows the operating state, and (D) shows data;
FIG. 6 shows the configuration of a charger; FIG. 6A is an oblique view, and FIG. 6B is a functional block diagram;
FIG. 7 is a functional block diagram showing the configuration of the control system of a computer main unit;
FIG. 8 is a flowchart showing charging control processing executed in the computer system;
FIG. 9 shows examples of charge request messages displayed on a monitor in charging control processing;
FIG. 10 shows other examples of reports of charging requests, in which FIG. 10A shows an example of provision of a light-emitting portion on a position indicator, FIG. 10B shows an example of provision of a light-emitting portion on a tablet, and FIG. 10C shows an example of provision of a light-emitting portion on a charger;
FIG. 11 is a flowchart showing charging control processing in a modified example of the first aspect;
FIG. 12 is a flowchart showing charging control processing in another modified example of the first aspect;
FIG. 13 shows the configuration of a charger in a second aspect to which the invention is applied, in which FIG. 13A is an oblique view, and FIG. 13B is a functional block diagram;
FIG. 14 is an oblique view showing the configuration of the tablet of a third aspect to which the invention is applied;
FIG. 15 is an oblique view showing the configuration of the tablet of a fourth aspect to which the invention is applied;
FIG. 16 shows the configuration of the tablet-type computer of a fifth aspect to which the invention is applied;
FIG. 17 shows the configuration of the internal circuitry in the position indicator of a sixth aspect to which the invention is applied; and,
FIG. 18 shows the configuration of the internal circuitry in the tablet of the sixth aspect to which the invention is applied.

### DESCRIPTION OF THE PREFERRED EMBODIMENTS

Below, aspects of the invention are explained referring to the drawings.

### [First Aspect]

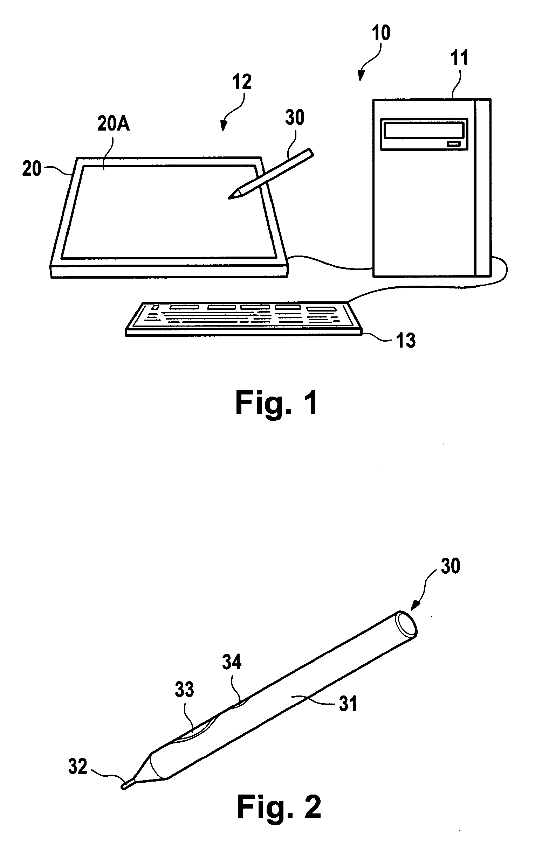

FIG. 1 shows in summary the configuration of a computer system 10 of a first aspect to which the invention is applied.

In the computer system 10 shown in FIG. 1, a monitor 12, in which an LCD (Liquid Crystal Display) or other display screen is integrated with a tablet 20 to perform position input using a pen, and a keyboard 13 are connected to a computer main unit 11. In addition, a charger 50 (stand) to charge a position indicator 30, described below, is connected to the computer main unit 11.

The tablet 20 (position detector device) functions as a position input device through use in conjunction with the position indicator 30, and detects a position indicated on an input area 20A in the screen of the monitor 12, indicated by the position indicator 30, and outputs the position coordinates to the computer main unit 11.

The charger 50 is a charger used to charge the position indicator 30, and is supplied with power by the computer main unit 11.

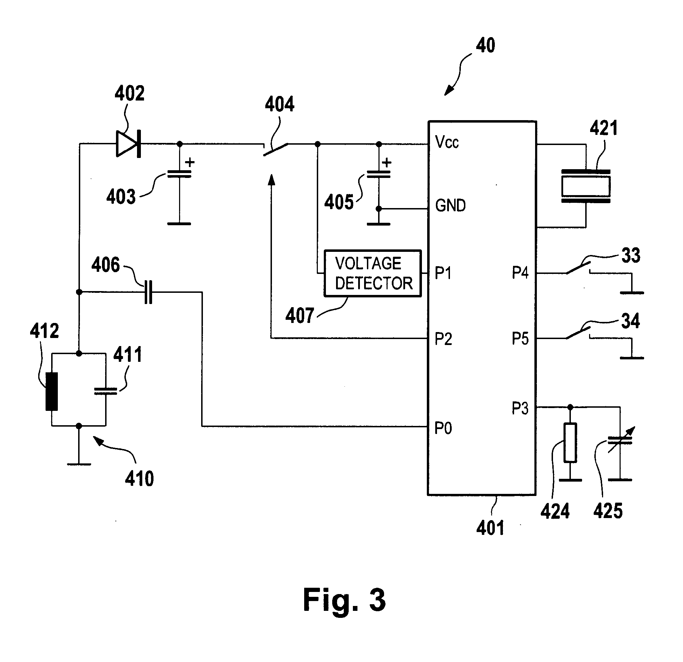

FIG. 2 shows an external view of the position indicator 30. A core 32 protrudes from the tip of the case 31. Two switches 33, 34 are positioned on a side face of the case 31, and an internal circuit 40 (FIG. 3) to transmit signals to the tablet 20 is housed within the case 31.

Here, the switches 33, 34 are operating portions of the switches 33, 34 indicated by the same numbers in the internal circuit 40 (FIG. 3), and the core 32 is linked to a variable-capacitance capacitor 425 in the internal circuit 40 (FIG. 3) explained below. While the position indicator 30 is used in operations in the display area (input area 20A) on the monitor 12, when pressure is applied to the core 32, the pressure on the core 32 is transmitted to the variable-capacitance capacitor 425, and the capacitance of the variable-capacitance capacitor 425 changes according to the magnitude of the pressure. Moreover, the switches 33, 34 are operated by the user as necessary.

FIG. 3 shows the configuration of the internal circuit 40 of the position indicator 30. The internal circuit 40 comprises a controller (microprocessor) 401, and operates according to a prescribed program. In FIG. 3, 421 is an oscillator which generates a clock signal to cause operation of the controller 401.

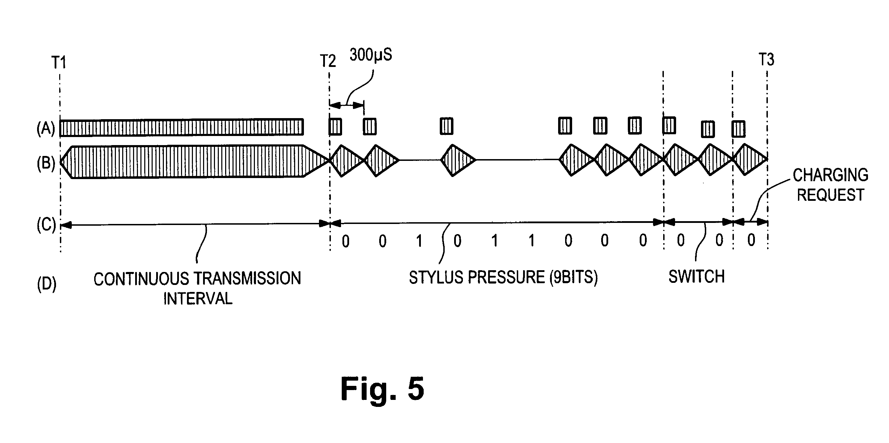

410 is a resonance circuit which resonates at a prescribed frequency, and is connected via a capacitor 406 to the terminal P0 of the controller 401. A signal with the same frequency as the resonance frequency of the resonance circuit 410 is output from the terminal P0 of the controller 401 with timing shown in FIG. 5 described below, to cause radiation of an AC magnetic field from the resonance circuit 401. 403 is an electrical double-layer capacitor, which supplies power to the controller 401 via the switch 404. The capacitor 405 is provided to stabilize the power supply voltage supplied to the controller 401; an aluminum electrolytic capacitor of value several tens to several hundreds of microfarads is appropriate.

407 is a voltage detector, which detects whether the voltage across the capacitor 405 is equal to or greater than a prescribed value, which in this case is 1.8 V; if the voltage is 1.8 V or higher, high level (a voltage substantially equal to the voltage across the capacitor 405) is output, and if the voltage does not reach 1.8 V, low level (0 V) is output.

The switch 404 is switched to the on or the off state by a control signal output from terminal P2 of the controller 401. Similarly to an ordinary capacitor, the voltage held by the electrical double-layer capacitor 403 declines with discharge. In order to hold constant the level of the AC magnetic field transmitted from the resonance circuit 410, the level of the signal output from terminal P0 of the controller 401 must be held constant, and to this end, the power supply voltage of the controller 401, that is, the voltage across the capacitor 405, must be held constant. To achieve this, in the present embodiment a power supply assistance unit, described below, is used.

The controller 401 repeats the operation to transmit signals from terminal P0 with the timing shown in FIG. 5; by detecting the presence or absence of signals from terminal P1 periodically during this interval, the voltage across the capacitor 405 is inspected to determine whether it is at 1.8 V or higher. When the voltage is less than 1.8 V, the controller 401 outputs a control signal from terminal P2, and turns on switch 404 for a prescribed time (for example, approximately 1 µs to 80 µs). If a voltage higher than 1.8 V is held by the electrical double-layer capacitor 403, then a portion of the charge held by the electrical double-layer capacitor 403 moves via the switch 404 to the capacitor 405, and so the voltage on the capacitor 405 rises to 1.8 V or higher. By thus periodically monitoring the terminal P1, the controller 401 controls the switch 404 such that the voltage on the capacitor 405 is substantially in the vicinity of 1.8 V. As the voltage on the electrical double-layer capacitor 403 approaches 1.8 V, the above-described operation causes the extent of the increase in the voltage of the capacitor 405 to become smaller, and the switch 404 is turned on more frequently. When this turning-on occurs at a frequency equal to or greater than a fixed value (for example, once every two times), the controller 401 sets the time over which the switch 404 is turned on to be somewhat longer.

By means of the above-described operation, the power supply voltage of the controller 401 in this embodiment is always held at a fixed value, so that the strength of signals transmitted from the resonance circuit 410 can be held constant. Further, unnecessary increases in the power supply voltage of the controller 401 are avoided, and so there is the further advantage that current consumption is reduced.

If, despite the fact that the time over which the switch 404 is turned on is set to a long value (for example, 80 µs), the frequency with which the switch 404 is turned on reaches or exceeds a constant value (for example once every two times), this fact indicates that the voltage on the electrical double-layer capacitor 403 has fallen to close to 1.8 V; and so the controller 401 transmits information (a charging request) indicating that the power supply voltage of the position indicator 30 has fallen, as indicated by the operation of FIG. 5, explained below.

When information (a charging request) indicating that the power supply voltage has fallen is transmitted from the position indicator 30, the user recognizes this by means of an operation described below, and mounts the position indicator 30 in the charger 50.

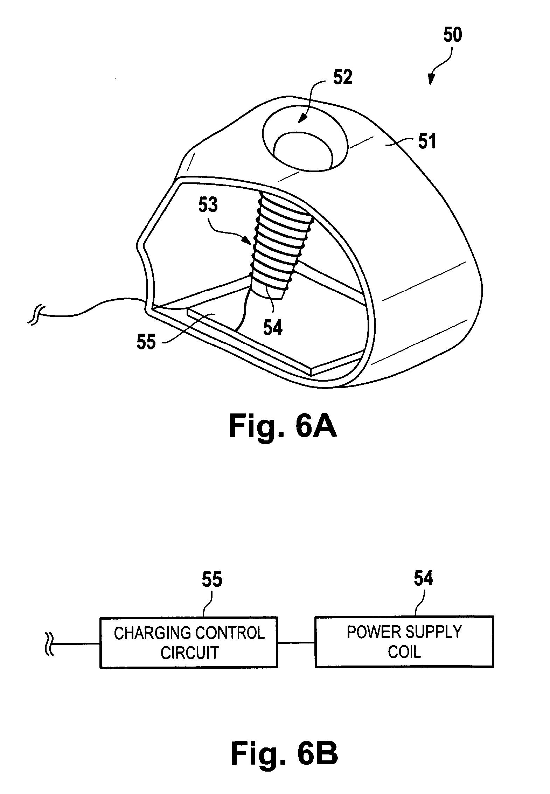

FIG. 6 shows the configuration of the charger 50 connected to the computer main unit 11; FIG. 6A is an oblique view, and FIG. 6B is a functional block diagram. 52 is an insertion opening, and is the portion into which the position indicator 30 is inserted. 53 is a support portion which supports the position indicator 30; a power supply coil 54 is wound about the support portion 53, the power supply coil 54 is connected to the charging control circuit 55, and the charging control circuit 55 is connected to the computer main unit 11. The charging control circuit 55 generates an AC voltage at the same frequency as the resonance frequency of the resonance circuit 410 by means of power supplied by the computer main unit 11, and applies the AC voltage to the power supply coil 54. By this means, an AC magnetic field is generated in the hollow portion of the support portion 53.

In a charger 50 configured in this way, when the position indicator 30 is inserted into the insertion opening 52, an induced voltage occurs in the resonance circuit 410 of the position indicator 30. This induced voltage is rectified by a diode 402, causing the electrical double-layer capacitor 403 to be charged.

In the position indicator 30 and charger 50 which operate as explained above, a charging circuit is formed by the resonance circuit 410 and the diode 402, an information transmission unit is formed by the resonance circuit 410, controller 401 and capacitor 406, a voltage detection unit is formed by the voltage detector 407 and controller 401, a power supply assistance unit is formed by the capacitor 405, switch 404, voltage detector 407 and controller 401, an AC magnetic field generation unit is formed by the power supply coil 54 and charging control circuit 55, and a power transmission unit is formed by the resonance circuit 410.

In this aspect, a power supply assistance unit is provided such that operation is always normal when the voltage across the electrical double-layer capacitor 403 is equal to or greater than the operating voltage (here 1.8 V) of the controller 401; but by providing a configuration which causes the voltage across the electrical double-layer capacitor 403 to be increased, a constant operating voltage can be supplied to the controller 401 even when voltage across the electrical double-layer capacitor 403 falls below the operating voltage of the controller 401.

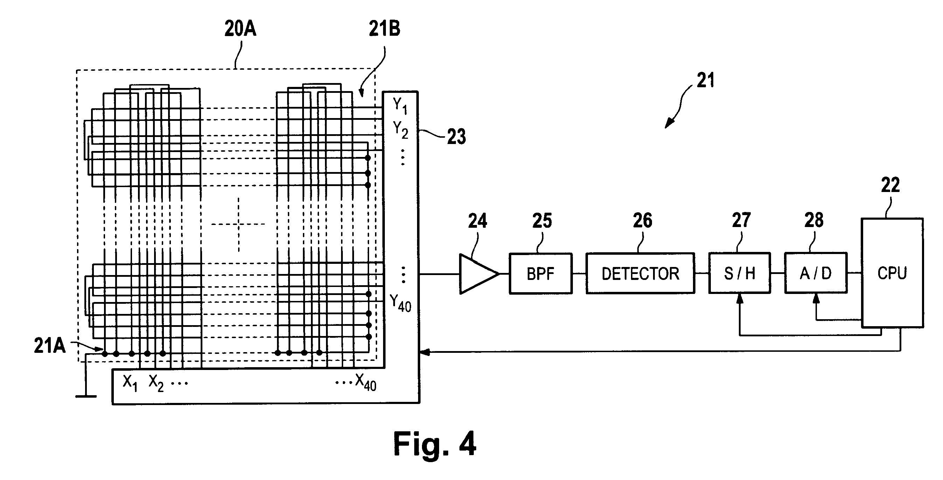

FIG. 4 shows the internal configuration (tablet circuit 21) of the tablet 20. The tablet circuit 21 is a circuit which receives signals transmitted from the internal circuit 40 (FIG. 3) of the position indicator 30, and detects the position indicated by the position indicator 30, and comprises a CPU (Central Processing Unit) 22 which executes control of each of the portions in FIG. 4 according to a prescribed program.

In FIG. 4, 21A and 21B are loop coil groups, and are embedded in the input area 20A (FIG. 1) of the tablet 20. In the input area 20A, a virtual X-Y orthogonal coordinate system is set; the loop coil group 21A comprises a plurality of loop coils arranged in the X direction, and the loop coil group 21 B comprises a plurality of loop coils arranged in the Y direction. Each of the loop coils comprised by the loop coil groups 21A and 21 B is connected to the selection circuit 23. The selection circuit 23 has the function of selecting one loop coil from among the loop coils of the loop coil groups 21A and 21 B, according to control by the CPU 22. The amplifier 24 amplifies the signals received by loop coils selected by the selection circuit 23; the BPF (Band Pass Filter) 25 passes the component of the signal amplified by the amplifier 24 in a specific frequency band; the signal component passed by the BPF 25 is converted into a voltage by the detector circuit 26, and is input to the sample/hold circuit (S/H) 27. The voltage held by the sample/hold circuit 27 is output to the AD conversion circuit (A/D) 28, and the CPU 22 reads the value output from the AD conversion circuit 28, and stores the value as the level of the signal read from the position indicator 30.

FIG. 5 is a timing chart showing transmission operations by the position indicator 30 to transmit signals to the tablet 20. In the figure, (A) shows output signals at terminal P0 of the controller 401 , (B) shows signals of the resonance circuit 410, (C) indicates the state of operation in the controller 401, and (D) shows the contents of response data, described below. The transmission operation shown in FIG. 5 broadly comprises a continuous transmission interval (times T1 to T2), and a data response interval (T2 to T3).

In the continuous transmission interval from times T1 to T2, a signal is output intermittently for a prescribed time (for example 2 ms) or longer from terminal P0 of the controller 401. This prescribed time is set to be sufficiently longer than the transmission time per bit of the data response interval, described below. By means of this continuous transmission operation, an AC magnetic field is radiated intermittently from the resonance circuit 410 during the prescribed time. When the prescribed time elapses, the controller 401 halts output of the signal from terminal P0. After waiting for a time (200 µs) until the resonance circuit signal has attenuated and has substantially vanished, the controller 401 shifts into the operation of the data response interval (T2 to T3). In the data response interval, 300 µs are allocated to one bit; here, 12 bits of data are transmitted. When the response data is "0", a signal is output for 100 µs from terminal P0, and output is halted for the remaining 200 µs. When the response data is "1", output from terminal P0 is halted for 300 µs. The 12 bits of data comprise nine bits of a stylus pressure value, obtained when the controller 401 detects the discharge time upon discharge through the resistance 424 of the variable-capacitance capacitor 425, the capacitance of which changes according to pressure applied to the core 32; two bits of switch information, resulting from detection of the operation states of the switches 33 and 34; and the above-described one bit of charging request information.

Operation of the tablet circuit 21 when the position indicator 30, operating in this manner, is placed on the input area 20A of the tablet, is as follows.

First, the CPU 22 detects the received signal level while switching in order among single loop coils in the loop coil group 21 B (indicator detection step). Here, if the position indicator 30 is placed at a position which is closest to loop coil Y7 among the loop coil group 21 B, then the CPU 22 detects the strongest signal level when loop coil Y7 is selected. Next, with the Y7 loop coil for which the strongest signal level was detected selected, the CPU 22 detects the signal level over a period which is short compared with the data response period (300 µs) of the position indicator (continuous transmission detection step). Here, when a signal at or above a prescribed level is detected continuously over a longer interval than the data response period (300 µs), operation proceeds to the coordinate detection step described below.

When a signal is detected at or above a prescribed level, continuously over an interval longer than the data response period (300 µs), the position indicator 30 has entered into the continuous transmission interval, and a stabilized signal is radiated from the position indicator 30 for a period of time.

The CPU 22 performs the following operation to detect the approximate X-axis position in the input area 20A. The CPU 22 detects the received signal level while switching and selecting in order one loop coil from among the loop coil group 21A (X-axis position detection step). Here, if the position indicator 30 is placed in a position which is closest to the loop coil X14 of the loop coil group 21A, then the CPU 22 detects the strongest signal level when the loop coil X14 is selected. Next, the CPU 22 detects the signal level while switching in order between a plurality of (for example, five) loop coils centered on X14 and Y7. Here, a strong signal is detected from the loop coils X14 and Y7 which are closest to the position indicator 30, and the further from these loop coils, the weaker is the signal. The CPU 22 can perform interpolation calculations between coils based on the signal level distribution detected for the X axis and Y axis, to accurately calculate the indicated position in the input area 20A (coordinate calculation step). This interpolation calculation is performed similarly to that of devices of the prior art.

When the coordinate calculation step ends, the CPU 22 then proceeds to a continuous transmission end detection step. The CPU 22 causes the selection circuit 23 to select Y7. In this state, the CPU 22 detects the signal level continuously in periods as short as possible (for example, at 5 µs intervals). When continuous transmission by the position indicator 30 ends, the signal from the resonance circuit 41 is gradually attenuated, as explained above. The CPU 22 detects the fact that the reception level has fallen to or below a prescribed value, and detects the timing with which continuous transmission ends. When the reception level falls to or below the prescribed value, the CPU 22 saves this time as the continuous transmission end time, and then proceeds to a data reception step.

Based on the continuous transmission end time, the CPU 22 performs signal detection 12 times with the same period as the data response period of the position indicator 30 (300 µs). In this signal detection, the delay time from the continuous transmission end time is adjusted in advance such that detection occurs precisely when the signal generated in the resonance circuit 410 when there is a data "0" response from the position indicator 30 is maximum.

By means of the above-described operation, the 12 bits of data transmitted from the position indicator 30 can be accurately detected by the CPU 22 as the presence or absence of a detection signal.

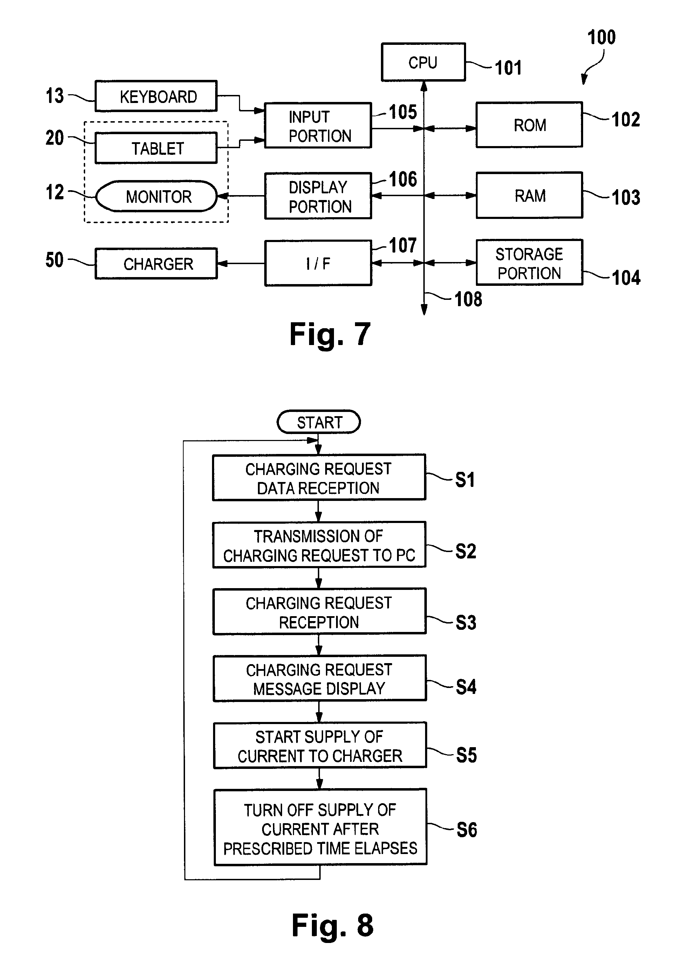

FIG. 7 is a block diagram showing the functional configuration of the control system 100 of the computer main unit 11.

The control system 100 shown in FIG. 7 comprises a CPU 101 which executes a program to perform data computation processing; ROM (Read-Only Memory) 102 which stores programs, data and similar; RAM (Random Access Memory) 103 which temporarily stores programs executed by the CPU 101 and data and similar used in computation processing; a storage portion 104 which stores various data; an input portion 105, to which are connected a keyboard 13 and the tablet 20; a display portion 106 to which is connected the monitor 12; and an interface portion 107. Each of these portions is connected to a bus 108.

In this aspect, the interface portion 107 is an interface which is connected to external equipment, and in addition to comprising functions to send and receive various data to and from the external equipment, has a function of supplying power to external equipment. The charger 50 is connected to the interface portion 107, and the interface portion 107 supplies power to the charger 50 under control of the CPU 101.

Further, when a charging request which requests charging of the position indicator 30 is input from the tablet 20 via the input portion 105, the CPU 101 executes charging control processing (FIG. 8), described below, in concert with the tablet 20 and charger 50, to cause charging of the position indicator 30.

FIG. 8 is a flowchart showing charging control processing executed in the computer system 10.

This charging control processing is started when the tablet 20 receives charging request data "1" transmitted from the position indicator 30 (step S1). As explained above, charging request data "1" is data indicating that the position indicator 30 requests charging of the electrical double-layer capacitor 403. Upon receiving the charging request data "1", the tablet 20 transmits a charging request to the computer main unit 11 (step S2).

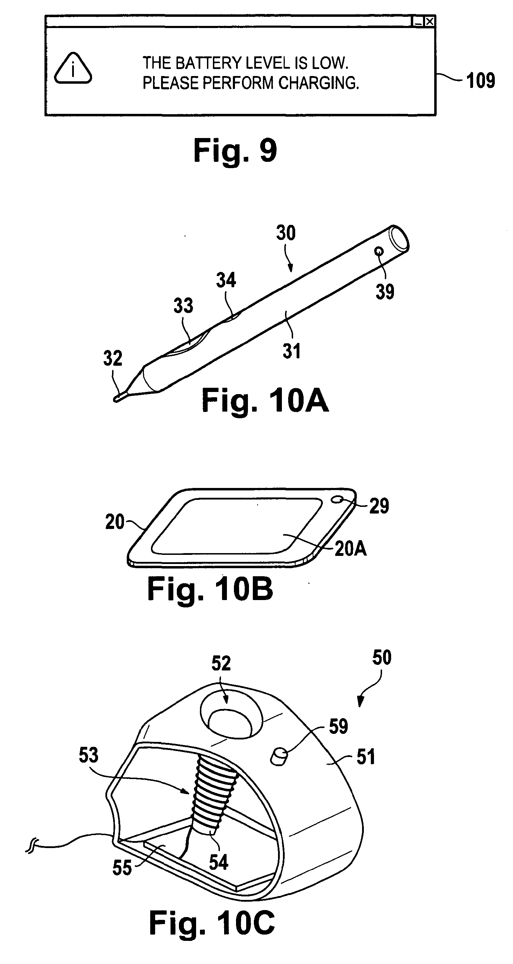

The CPU 101, upon receiving the charging request from the tablet 20 (step S3), displays a charging request message on the monitor 12 (step S4). This charging request message is a message guiding the user operating the position indicator 30 to set the position indicator 30 in the charger 50 to perform charging. The charging request message may for example be displayed in a charging guidance screen 109 as shown in FIG. 9.

Next, the CPU 101 causes the start of the supply of power to the charger 50 from the interface portion 107 (step S5), and after a prescribed time has elapsed causes the supply of power to the charger 50 to be stopped (step S6), and then returns to step S1.

In this way, the charger 50 generates an AC magnetic field in the vicinity of the coil 412 of the internal circuit 40 (FIG. 3), and so the electrical double-layer capacitor 403 is charged. Compared with a so-called secondary battery (nickel-cadmium battery or similar), charging of the electrical double-layer capacitor 403 is completed in an extremely short amount of time (for example, approximately 10 to 50 seconds). Hence as the time of supply of power to the charger 50 from the interface portion 107, including the time required for the user to set the position indicator 30 in the charger 50, two to three minutes or so is sufficient.

By means of this charging control processing, when the voltage across the electrical double-layer capacitor 403 falls during use of the position indicator 30 by the user, a display on the monitor 12 provides guidance to charge the position indicator 30, so that the user can charge the position indicator 30 according to this guidance. Charging of the position indicator 30 is performed in a very short time simply by inserting the position indicator 30 into the insertion opening 52 of the charger 50, so that the user need perform only an extremely simple operation, and there is no diminution of operability.

In the position input device of this aspect, signals are transmitted by means of power accumulated in the electrical double-layer capacitor 403, so that compared with devices of the prior art in which signals are transmitted from the tablet, strong signals can be received by the tablet from the position indicator even under extremely low power consumption. Consequently strong signals can be received from the position indicator 30 even in the presence of noise from external sources, and in particular noise from an integrated LCD, so that there is the advantage that coordinate positions and data can be detected with stability.

Further, the electrical double-layer capacitor 403 does not require battery replacement as in the case of devices of the prior art which incorporate primary batteries, and moreover charging can be performed in an extremely short time compared with other secondary batteries having comparable capacities, so that the user feels no inconvenience due to inability to use the position indicator until charging is completed.

When charging the electrical double-layer capacitor 403 of the position indicator 30, charging can be performed extremely easily, merely by setting the position indicator 30 in the charger 30. This charging is performed by causing the power supply coil 54 of the charger 50 to generate an AC magnetic field in the vicinity of the coil 402; the power supply coil 54 and 412 do not make contact. By means of this contact-free configuration, there is greater freedom of design of the charger 50 and position indicator 30, and durability can be further enhanced.

In the above first aspect, an example was explained in which, by displaying a charging guidance screen 109 or similar on the monitor 12 the user is prompted to perform charging; however, this invention is not limited to such a configuration, and for example the fact that charging is necessary can be reported through the position indicator 30, tablet 20, or charger 50. This reporting by the position indicator 30, tablet 20 and charger 50 may be performed independently, or may be performed simultaneously, or may be performed in place of a charging request message displayed on the monitor 12 in the above-described charging control processing, or may be performed in conjunction with display of the charging request message.

That is, as shown in FIG. 10A, a configuration may be employed in which a light-emitting portion 39 is provided in the case 31 of the position indicator 30, so that when the controller 401 judges that charging of the electrical double-layer capacitor 403 is necessary, the light-emitting portion 39 is caused to light or to flash under control of the controller 401. As the light-emitting portion 39, for example, an LED (light-emitting diode) can be used.

Also, as shown in FIG. 10B, a light-emitting portion 29 configured as an LED similarly to the light-emitting portion 39 may be provided in the housing of the tablet 20. In this case, when the tablet receives a charging request data "1" transmitted from the position indicator 30, the light-emitting portion 29 is caused to light under control of the CPU 22.

Further, as shown in FIG. 10C, a light-emitting portion 59 configured as an LED similarly to the light-emitting portions 29 and 39 may be provided in the housing 51 of the charger 50.

Here, the light-emitting portion 59 may be caused to light or to flash while power is being supplied from the interface portion 107 of the computer main unit 11 to the charger 50. In this case, in step S5 of the charging control processing (FIG. 8), the light-emitting portion 59 is caused to light or to flash when power supply to the charger 50 is started, and the light-emitting portion 59 is extinguished when power supply to the charger 50 is stopped in step S6.

Alternatively, the light-emitting portion 59 may be caused to light or to flash when power is received from the interface portion 107 of the computer main unit 11, separately from the charging control circuit 55 of the charger 50. In this case, when in step S3 of the charging control processing the CPU 101 receives a charging request from the tablet 20, power is supplied from the interface portion 107 to the light-emitting portion 59.

In all of the above cases, the user learns of the need to charge the position indicator 30 through the lighting or flashing of the light-emitting portion 59, and so can promptly charge the position indicator 30.

In the above first aspect, an example was explained in which the computer main unit 11 supplies power to the charger 50 when the charging request data transmitted from the position indicator 30 is "1"; but the invention is not limited to such a configuration, and for example control may be executed in which power is supplied to the charger based on the time elapsed since the previous charging. Below, such cases are explained as modified examples 1 and 2 of this aspect.

### [Modified Example 1]

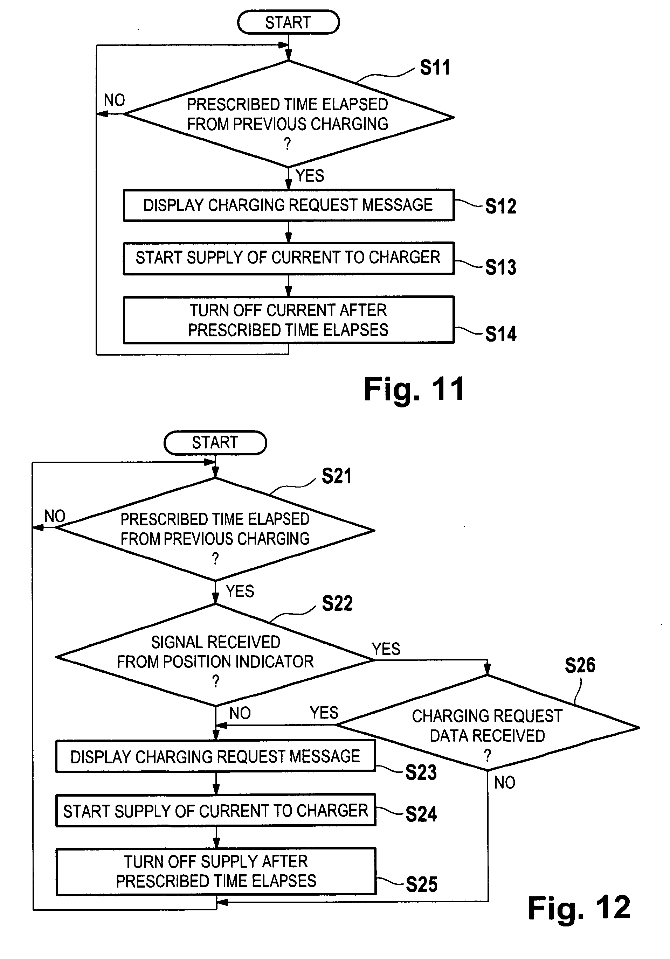

FIG. 11 is a flowchart showing charging control processing in a modified example of the above first aspect. The configuration of this modified example is similar to that of the computer system 10 of the above first aspect, except for the operation of charging control processing.

In the charging control processing shown in FIG. 11, the CPU 101 of the computer main unit 11 counts the time elapsed from the previous charging of the position indicator 30 (step S11), and when this elapsed time has reached a prescribed time (step S11: Yes), displays a charging request message on the monitor 12 (step S12), and causes the supply of power from the interface portion 107 to the charger 50 to be started (step S13). Then, after a prescribed time has elapsed, the CPU 101 stops the supply of power to the charger 50 (step S14), returns to step S11, and counts the elapsed time.

In this case, even when the tablet 20 has not received charging request data from the position indicator 30, the user can be prompted to charge the position indicator 30. Hence when charging request data cannot be received from the position indicator 30, that is, even when the voltages on the electrical double-layer capacitor 403 and capacitor 405 have fallen to extremely low levels and the controller 401 cannot operate at all, or even when some obstacle exists or the distance between the position indicator 30 and tablet 20 is too great, so that data cannot be transmitted from the position indicator 30 to the tablet 20, the user can still be informed of the need to charge the position indicator 30.

### [Modified Example 2]

FIG. 12 is a flowchart showing charging control processing in another modified example of the above first aspect. The configuration of this modified example is similar to that of the computer system 10 of the above first aspect, except for the operation of charging control processing.

In the charging control processing shown in FIG. 12, the CPU 101 of the computer main unit 11 counts the time elapsed from the previous charging of the position indicator 30 (step S21), and when this elapsed time has reached a prescribed time (step S21: Yes), judges whether the tablet 20 is able to receive signals transmitted from the position indicator 30 (step S22).

When no signals transmitted from the position indicator 30 are being received by the tablet 20 (step S22: No), the controller 401 displays a charging request message on the monitor 12 (step S23) and starts the supply of power from the interface portion 107 to the charger 50 (step S24), and after a prescribed time has elapsed stops the supply of power to the charger 50 (step S25), and returns to step S21 to begin counting elapsed time.

On the other hand, when after the prescribed time has elapsed from the previous charging signals from the position indicator 30 are being received by the tablet 20 (step S22: Yes), the controller 401 judges whether signals received by the tablet 20 comprise the charging request data "1" (step S26). When the charging request data "1" is comprised (step S26: Yes), the controller 401 proceeds to step S23 and causes charging to be performed, and when the charging request data "1" is not comprised (step S26: No), returns to step S21.

In this case, even when charging request data is not received by the tablet 20 from the position indicator 30, the user can be prompted to charge the position indicator 30; for example, even when charging request data cannot be received from the position indicator 30, the user can be made to charge the position indicator 30 to return to a state in which use is possible. Further, when signals are transmitted from the position indicator 30 to the tablet 20 and moreover there is no charging request data "1" from the position indicator 30 even after the prescribed time has elapsed from the previous charging, that is, when adequate charge remains on the electrical double-layer capacitor 403 in the position indicator 30, no charging is performed, and so unnecessary charging can be avoided.

In the above first aspect and modified examples, configurations were explained in which the supply of power to the charger 50 is started and stopped under control of the CPU 101; however, this invention is not limited to such a configuration, and for example a switch may be provided on the charger 50. Such a case is explained as a second aspect.

### [Second Aspect]

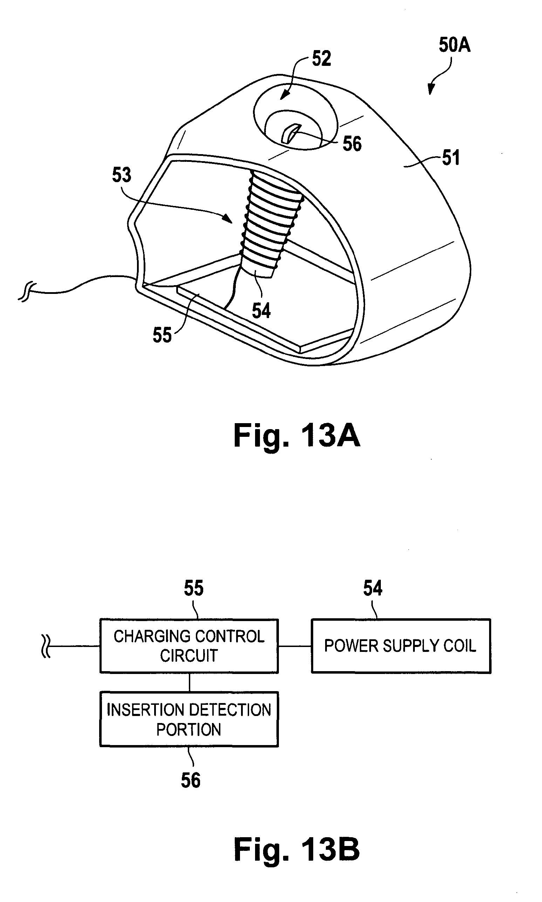

FIG. 13 shows the configuration of a charger 50A (stand) of a second aspect to which the invention is applied, in which FIG. 13A is an oblique view and FIG. 13B is a functional block diagram.

The computer system 10 of this second aspect has a configuration common with that of the above first aspect except for the charger 50A shown in FIG. 13, and so common portions are omitted from the drawings and explanations.

As shown in FIG. 13A, the charger 50A of this second aspect is provided with a detection switch 56 in the portion between the inner side of the insertion opening 52 and the inside of the support portion 53. The detection switch 56 is configured so as to descend when pressure is applied, and an internal electrical contact is closed upon descent.

As shown in FIG. 13B, the detection switch 56 is connected to the charging control circuit 55 and the charging control circuit 55 comprises a function of passing a current to the power supply coil 54 only in the state in which the detection switch 56 is closed.

By means of this configuration, when the position indicator 30 (FIG. 2) is inserted into the insertion opening 52 of the charger 50A, the detection switch 56 is pressed by the case 31, and current begins to be supplied to the power supply coil 54. In this state, an AC magnetic field is generated by the power supply coil 54 in the vicinity of the position indicator 30, and an induced voltage appears in the coil 412 (FIG. 3), so that the electrical double-layer capacitor (FIG. 3) is charged. When the position indicator 30 is removed from the insertion opening 52, current to the power supply coil 54 is stopped. Hence when charging the position indicator 30, it is sufficient to insert the position indicator 30 into the insertion opening 52, wait for a prescribed length of time (for example, approximately 10 to 50 seconds), and then remove the position indicator 30.

In this case, even when power is constantly supplied to the charger 50A from the computer main unit 11, current is passed to the power supply coil 54 only when the position indicator 30 is actually set in the charger 50A and the position indicator 30 is being charged, so that unnecessary power consumption can be suppressed. Further, there is no longer a need for the computer main unit 11 to control current flow to the charger, so that more efficient control is possible.

In the above first and second aspects and in the modified examples, configurations were described in which the position indicator 30 was charged by chargers 50, 50A; but a tablet which integrates the functions of these chargers 50, 50A can be used. Such cases are explained as third and fourth aspects.

### [Third Aspect]

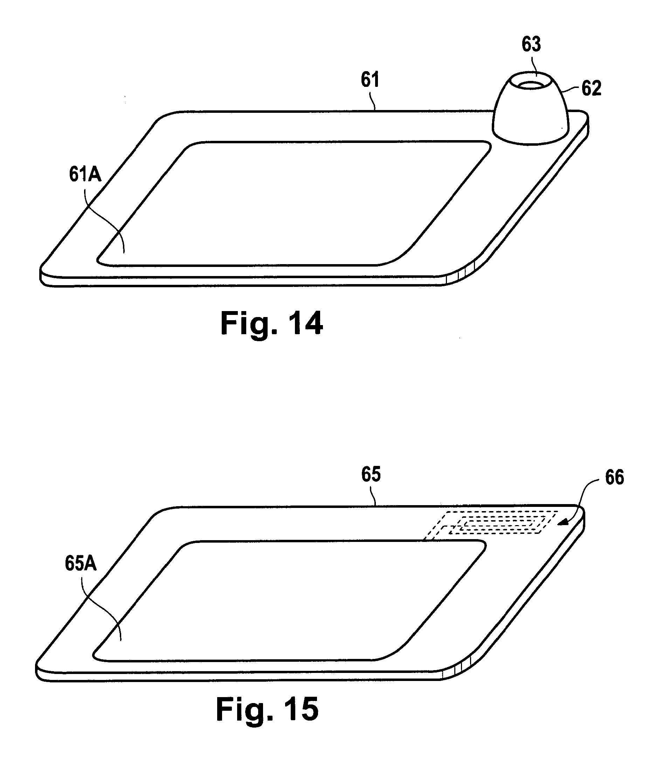

FIG. 14 is an oblique view showing the tablet 61 of a third aspect to which the invention is applied.

The computer system 10 of this third aspect comprises the tablet 61 shown in FIG. 14 in place of the tablet 20 and charger 50 shown in FIG. 1. Except for this tablet 61, the configuration of the computer system 10 is common to that of the above first aspect, and so common portions are omitted from the drawings and explanations.

The tablet 61 shown in FIG. 14 has a configuration in which an input area 61A is provided on the upper face of a substantially planar housing. The tablet 61 incorporates an internal circuit 21 (FIG. 4) similar to that of the tablet 20, and in the input area 61A are embedded loop coil groups 21A, 21 B. On the outside of the input area 61A is positioned a charging portion 62 (stand) on the upper face of the tablet 61. The charging portion 62 has an outer casing which is substantially dome-shaped, and an insertion opening 63 is formed in the upper end of this outer casing. The insertion opening 63 has a diameter enabling insertion of at least the tip portion of the position indicator 30 (FIG. 2), and is connected to a hole extending to the interior of the charging portion 62.

The charging portion 62 incorporates a power supply coil 54 (FIG. 6) and charging control circuit 55 (FIG. 6) similarly to the charger 50, and the power supply coil 54 is wound around the outside of the hole connected to the charging portion 62.

By means of this configuration, in a state in which current is being supplied to the power supply coil 54 incorporated into the charging portion 62, by inserting the position indicator 30 into the insertion opening 63 an AC magnetic field is generated in the vicinity of the coil 412 (FIG. 4) comprised by the position indicator 30, and the electrical double-layer capacitor 403 (FIG. 4) is charged by the current flowing in this coil 412 which is induced by the AC magnetic field.

That is, the tablet 61 combines the functions of the tablet 20 for performing position input operations using the position indicator 30 and the functions of the charger 50 to perform charging of the position indicator 30. Hence by means of this third aspect, there is the advantage that the computer system 10 can be installed in a smaller space. Further, the computer main unit 11 and tablet 61 can be connected by what appears to be a single cable, so that cable layout is simplified, and there is the advantage of excellent ease of installation.

### [Fourth Aspect]

FIG. 15 is an oblique view showing the configuration of the tablet 65 in a fourth aspect to which the invention is applied.

The computer system 10 of this fourth aspect comprises the tablet 65 shown in FIG. 15 in place of the tablet 20 and charger 50 shown in FIG. 1. Except for this tablet 65, the configuration of the computer system 10 is common to that of the above first aspect, and so common portions are omitted from the drawings and explanations.

The tablet 65 shown in FIG. 15 has a configuration in which an input area 65A is provided on the upper face of a substantially planar housing. The tablet 65 incorporates an internal circuit 21 (FIG. 4) similar to that of the tablet 20, and in the input area 65A are embedded loop coil groups 21A, 21 B. On the outside of the input area 65A is embedded a power supply coil 66 (AC magnetic field generation unit) for the tablet 65. The power supply coil 66 is for example a loop coil positioned in a plane parallel to the upper face of the tablet 65, and more specifically, is mounted by means of a printed board or similar having a plurality of layers.

The tablet 65 incorporates a charging control circuit 55 (FIG. 6) similar to that of the charger 50; the charging control circuit 55 is connected to the power supply coil 66. Hence an AC voltage is applied to the power supply coil 66 under control of the charging control circuit 55, and an AC magnetic field appears in the direction perpendicular to the plane of the power supply coil 66.

According to this configuration, by incorporating the charging control circuit 55 in the tablet 65, when the tip of the position indicator 30, that is, the coil 412 (FIG. 4), is brought close to the power supply coil 66 in a state in which current is being supplied to the power supply coil 66, an AC magnetic field appears in the vicinity of the coil 412, and the electrical double-layer capacitor 403 (FIG. 4) is charged by the current flowing in the coil 412 induced by this AC magnetic field. Hence merely by performing the simple operation of for example standing the position indicator 30 above the power supply coil 66, the position indicator 30 can be charged.

Further, the tablet 65 combines the functions of the tablet 20 to perform position input operations using the position indicator 30 and the functions of the charger 50 to charge the position indicator 30, so that there is the advantage that the computer system 10 can be installed in a smaller space. Further, the computer main unit 11 and tablet 65 can be connected by what appears to be a single cable, so that cable layout is simplified, and there is the advantage of excellent ease of installation.

It is of course possible to provide, by printing or other means, a display on the upper face of the tablet 65 indicating the location in which the power supply coil 66 is embedded, and to provide guidance, in a charging request message displayed on the monitor 12, for charging the position indicator 30 using this printed display as a guide.

### [Fifth Aspect]

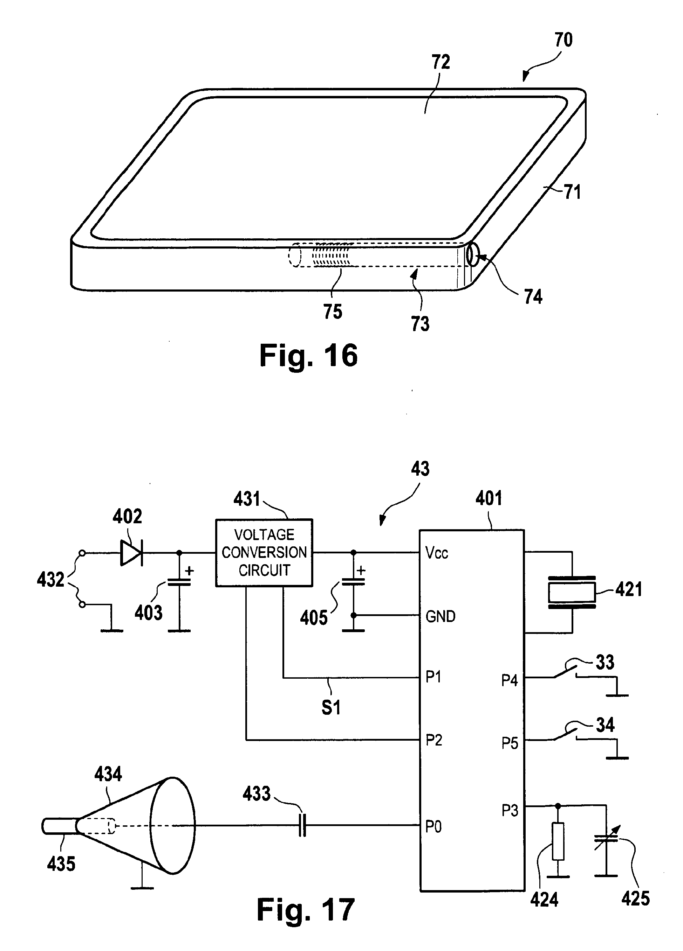

FIG. 16 is an oblique view showing the configuration of the tablet-type computer 70 of a fifth aspect to which the invention is applied.

The tablet-type computer 70 of this fifth aspect is a portable-type computer incorporating a battery (not shown) as a power supply, and has functions similar to those of the computer systems 10 in the above first through fourth aspects and in the modified examples.

That is, the tablet-type computer 70 incorporates the control system 100 of the computer main unit 11 in a substantially board-shaped case 71. A liquid crystal display panel 72 (display device) is positioned on the surface of the case 71, and below the liquid crystal display panel 72 is housed an internal circuit 21 (FIG. 4) incorporated within the tablet 20, with loop coil groups 21A, 21 B embedded. That is, the liquid crystal display panel 72 also functions as an input area, and position input operations using the position indicator 30 can be performed on the liquid crystal display panel 72.

Further, the functional configuration of the tablet-type computer 70 is similar to that of the control system 100 of the computer main unit 11 in FIG. 7, and various basic control programs and application programs are executed based on input operations by the position indicator 30.

An indicator housing portion 73 which houses the position indicator 30 (FIG. 2) is formed in the case 71 of the tablet-type computer 70. The indicator housing portion 73 is a tube-shaped hole, linked to an insertion opening 74 which opens onto a side face of the case 71; the depth and inner diameter are of sizes enabling housing of the case 31 of the position indicator 30. Hence by inserting the position indicator 30 from the insertion opening 74, the position indicator 30 can be housed within the indicator housing portion 73. Further, a power supply coil 75 (AC magnetic field generation unit) is wound around the outside of the region of the indicator housing portion 73 housing the tip portion of the position indicator 30. An AC voltage is applied to the power supply coil 75 by a charging control circuit, not shown. By means of this AC voltage, an AC magnetic field appears within the indicator housing portion 73.

In the tablet-type computer 70 configured in this way, when the position indicator 30 is not in use and is housed in the indicator housing portion 73, the position indicator 30 is charged. Hence the position indicator 30 is maintained in a constantly charged state, and there is the advantage that the position indicator 30 can be used simply by removal from the indicator housing portion 73. Further, while there is a limit to the capacity of the battery in the tablet-type computer 70, if, as in the above first aspect and modified examples, current is supplied to the power supply coil 75 only when the position indicator 30 must be charged, power consumption can be greatly reduced, with no effect on the availability for use of the tablet-type computer 70.

In the tablet-type computer 70, the position indicator 30 and the loop coil groups 21A, 21 B are opposed on either side of the liquid crystal display panel 72, and there is the possibility that signals transmitted from the position indicator 30 may be affected by electromagnetic noise; but because, as described above, the position indicator 30 can transmit signals efficiently and at high power, signals from the position indicator 30 can be received satisfactorily by the loop coil groups 21A, 21 B. As a result, positions input using the position indicator 30 can be detected precisely and with stability, and satisfactory operability is secured.

In the above first through fifth aspects and the modified examples, examples were explained in which a method of generating an AC magnetic field in the vicinity of the coil 412 was used as the method of charging the electrical double-layer capacitor 403 incorporated within the position indicator 30; but this invention is not limited to such a method, and for example exposed terminals electrically connected to both ends of the electrical double-layer capacitor 403 may be provided in the case 31, so that by connecting the exposed terminals to a power supply device external to the position indicator 30, the electrical double-layer capacitor 403 can be charged.

Further, in the above first through fifth aspects and the modified examples, an electrostatic coupling method may be used to detect the position of the position indicator 30 using the tablet 20.

Below, an example of this is explained as a sixth aspect.

### [Sixth Aspect]

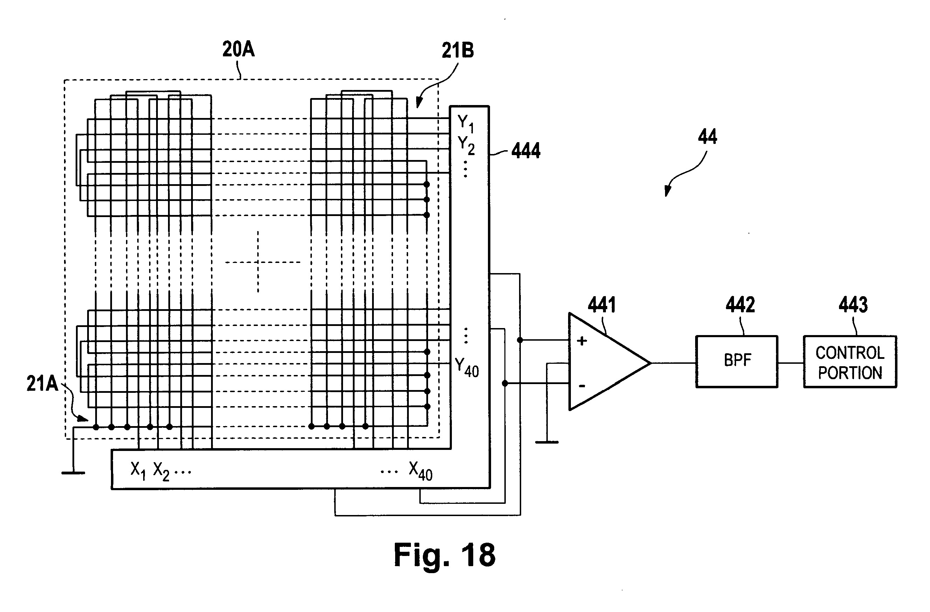

FIG. 17 shows the configuration of the internal circuit 43 of the position indicator in a sixth aspect. FIG. 18 shows the configuration of the internal circuit 44 in the tablet of the sixth aspect. In the internal circuit 43 and internal circuit 44 shown in FIG. 17 and FIG. 18, portions which are configured similarly to those in the internal circuit 40 (FIG. 3) and the internal circuit 21 (FIG. 4) are assigned the same symbols, and explanations are omitted.

In this sixth aspect, the position indicator 30 incorporating the internal circuit 43 and the tablet 20 incorporating the internal circuit 44 perform detection of indicated positions by means of an electrostatic coupling method.

That is, a non-equilibrium signal voltage is applied as reference to the tip conductor 434 of the conductive core 435 which protrudes from the tip of the case 31 (FIG. 2) in the position indicator 30. When an operation is performed in which this conductive core 435 is brought into contact with the surface of the tablet 20, that is, with the input area 20A (FIG. 1), loop coils in the tablet 20 are electrostatically coupled with the conductive core 435. Here, a potential difference appears at each loop coil in the tablet, and these potential differences correspond to the distance from the conductive core 435, so that the position of the conductive core 435 can be detected based on the potential differences of a plurality of loop coils.

The configuration of the internal circuit 43 in FIG. 17 is explained.

In the internal circuit 43, a voltage conversion circuit 431 (voltage supply assistance unit) is connected in series between the electrical double-layer capacitor 403 and the power supply terminal Vcc of the controller 401. The voltage conversion circuit 431 is a circuit which converts the voltage across the electrical double-layer capacitor 403 and supplies a power supply voltage to the Vcc terminal of the controller 401. If the rated power supply voltage of the controller 401 is 1.5 V, and if the voltage across the electrical double-layer capacitor 403 is 2.5 V, then the voltage conversion circuit 431 steps down this voltage to 1.5 V, and applies this to the power supply terminal Vcc. Also, when for example the voltage across the electrical double-layer capacitor 403 falls to 0.5 V, the voltage conversion circuit 431 steps up this voltage to 1.5 V and supplies this to the power supply terminal Vcc.

Control signals from the terminal P1 of the controller 401 are input to the voltage conversion circuit 431, and signals can be transmitted from the voltage conversion circuit 431 to the terminal P2 of the controller 401. When a control signal is input from the terminal P1 of the controller 401, the voltage conversion circuit 431 detects the voltage across the electrical double-layer capacitor 403, and outputs a signal indicating the voltage value to the terminal P2. By this means, the controller 401 can judge whether charging of the electrical double-layer capacitor 403 is necessary.

In the internal circuit 43, a charging terminal 432 (power transmission unit) is connected to the electrical double-layer capacitor 403. This charging terminal 432 comprises a contact point exposed from the case 31 (FIG. 2) of the position indicator 30, and this contact point is connected to a power supply device external to the computer system 10. Hence the electrical double-layer capacitor 403 is charged by this external power supply device.

Upon receiving a power supply voltage from the electrical double-layer capacitor 403, the controller 401 applies a sinusoidal voltage from the terminal P0 to the conductive core 435 protruding from the tip of the case 31 (FIG. 2), based on a clock pulse generated by an oscillator 421. A capacitor 433 is connected in series between the terminal P0 and the conductive core 435, and only a sine-wave component is applied to the conductive core 435. Here, a tip conductor 434 is positioned on the periphery of the conductive core 435, and this tip conductor 434 is connected to a GND terminal of the controller 401.

On the other hand, in the internal circuit 44 incorporated within the tablet 20, each of the loop coils of the loop coil groups 21A, 21 B is connected to the multiplexer 444, and this multiplexer 444 is connected to a differential amplifier 441, band-pass filter (BPF) 442, and control portion 443, as shown in FIG. 18.

The differential amplifier 441 amplifies the differences in the input signals from each loop, connected via the multiplexer 444, and outputs the result to the band-pass filter 442; after removal of noise components from this signal by the band-pass filter 442, the signal is input to the control portion 443. The control portion 443 detects the position of the conductive core 435, that is, the position indicated using the position indicator 30, based on the input signal.

In this way, this invention can be applied in cases of position detection using an electrostatic coupling method. In such cases also, the internal circuit 43 of the position indicator 30 has an electrical double-layer capacitor 403, and this electrical double-layer capacitor 403 can be used as a power supply to drive the controller 401, so that sufficiently strong signals can be transmitted from the internal circuit 43, and moreover battery replacement and other troublesome maintenance is unnecessary.

Further, when a charging terminal 432 to charge the electrical double-layer capacitor 403 is provided, as in the sixth aspect, by connecting a device which supplies a prescribed DC voltage as an external power supply device to the charging terminal 432, the electrical double-layer capacitor 403 can be charged rapidly. As explained above, the electrical double-layer capacitor 403 can be charged in an extremely short time, and so the external power supply device need only be connected to the charging terminal 432 for a short time. Hence charging is easily performed, and there is no need to provide a special mechanism or similar to maintain contact between the external power supply and the charging terminal 432, and the device can easily be realized at extremely low cost.

In this sixth aspect, the loop coil groups 21A, 21 B may be embedded in the tablet 20 as described above; however, loop coils which do not detract from the viewability of the liquid crystal screen of the tablet 20 may be positioned at the surface of the tablet 20. In this case, there is the advantage that the position indicated by the position indicator 30 incorporating the internal circuit 43 can be detected more stably and reliably.

In the above first through sixth aspects and the modified examples, cases in which a position indicator 30 having a pen-type case 31 were explained; but the invention is not limited to such a configuration, and for example a configuration may be employed using an air-brush type, digitizer cursor type, or mouse type position indicator or similar, or a smaller indicator with a ring shape. Moreover, the position of the coil 412 in the position indicator 30, the position, shape and number of the switches 33 and 34, and similar are arbitrary, and other details of the configuration may also be modified arbitrarily.

It should be understood by those skilled in the art that various modifications, combinations, sub-combinations and alterations may occur depending on design requirements and other factors, insofar as they are within the scope of the appended claims or the equivalents thereof.

### REFERENCE NUMERALS

**FIG. 3**
   - 407: VOLTAGE DETECTOR
**FIG. 4**
   - 26: DETECTOR
**FIG. 5**
   CONTINUOUS TRANSMISSION INTERVAL
   STYLUS PRESSURE (9 BITS)
   SWITCH
   CHARGING REQUEST
**FIG. 6B**
   - 55: CHARGING CONTROL CIRCUIT
   - 54: POWER SUPPLY COIL
**FIG. 7**
   - 13: KEYBOARD
   - 20: TABLET
   - 12: MONITOR
   - 50: CHARGER
   - 105: INPUT PORTION
   - 106: DISPLAY PORTION
   - 104: STORAGE PORTION
**FIG. 8**
   - S1: CHARGING REQUEST DATA RECEPTION
   - S2: TRANSMISSION OF CHARGING REQUEST TO PC
   - S3: CHARGING REQUEST RECEPTION
   - S4: CHARGING REQUEST MESSAGE DISPLAY
   - S5: START SUPPLY OF CURRENT TO CHARGER
   - S6: TURN OFF SUPPLY OF CURRENT AFTER PRESCRIBED TIME ELAPSES
**FIG. 9**
   - 109: THE BATTERY LEVEL IS LOW. PLEASE PERFORM CHARGING.
**FIG. 11**
   - S11: PRESCRIBED TIME ELAPSED FROM PREVIOUS CHARGING?
   - S12: DISPLAY CHARGING REQUEST MESSAGE
   - S13: START SUPPLY OF CURRENT TO CHARGER
   - S14: TURN OFF CURRENT AFTER PRESCRIBED TIME ELAPSES
**FIG. 12**
   - S21: PRESCRIBED TIME ELAPSED FROM PREVIOUS CHARGING?
   - S22: SIGNAL RECEIVED FROM POSITION INDICATOR?
   - S26: CHARGING REQUEST DATA RECEIVED?
   - S23: DISPLAY CHARGING REQUEST MESSAGE
   - S24: START SUPPLY OF CURRENT TO CHARGER
   - S25: TURN OFF SUPPLY AFTER PRESCRIBED TIME ELAPSES
**FIG. 13B**
   - 55: CHARGING CONTROL CIRCUIT
   - 54: POWER SUPPLY COIL
   - 56: INSERTION DETECTION PORTION
**FIG. 17**
   - 431: VOLTAGE CONVERSION CIRCUIT
**FIG. 18**
   - 443: CONTROL PORTION

## Claims

1. A position indicator (30) comprising:
- a controller (401) to which a predetermined driving voltage is supplied;
- position signal transmission means (32, 40, 401, 410; ) for transmission of position signals in response to a signal outputted from the controller (401),
- an electrical double layer capacitor (403) for providing power to the the controller (401),
- power transmission means (410) being adapted for receiving power from a power supply unit (50; 50A; 62, 63; 66; 75) external to the position indicator and for charging the electrical double layer capacitor (403),
- a capacitor (405) provided to stabilize the power supply voltage supplied to the controller (401),
- voltage detection means (407) adapted to detect voltage across the capacitor (405) and to supply the detection output to the controller (401),
- a switch (404) provided between said electrical double layer capacitor (403) and said stabilizing capacitor (405) and configured to be turned on and off by the controller (401) in response to the detection output such that the predetermined driving voltage is supplied to said controller (401).

2. The position indicator (30) according to claim 1, wherein said power transmission means being adapted for receiving an AC signal supplied from the outside to said position indicator (30), wherein said position indicator (30) further comprises a rectification circuit for rectifying the AC signal received by said power transmission means, wherein the power transmission means are adapted for receiving the power contactlessly by the AC signal to charge said charging capacitor through the rectification circuit.

3. The position indicator (30) according to claim 1, further comprising light emitting means for issuing a notification that charging is required in response to the output signal from said voltage detection means.

4. The position indicator (30) according to claim 1, further comprising a variable capacitor having capacitance which varies in response to the magnitude of pressing force applied to a core.

5. A position inputting apparatus, comprising
- a position indicator (30) in accordance with any one of claims 1 to 4 for transmission of position signals to a position detector device (20; 72) having a predetermined input area for receiving the position signals from the position indicator, a display device (72) for displaying information, detected by said position detector device,
- the position indicator further comprising means (407; 410, 401, 406; 433, 435, 401) for signaling a voltage drop of said capacitor to the position detector device,
- the display device further comprising meanst for prompting a user regarding charging or recharging of said capacitor based on the voltage drop being signaled from the position detector device.

6. The position inputting apparatus according to claim 5, wherein said display device is adapted
- to function as said input area,
- to receive the position signals while the generation of the signal (109) prompting the user for charging or recharging is carried out on said display panel.

## Patentansprüche

1. Positionsanzeiger (30), umfassend:
- eine Steuereinheit (401), an die eine vorgegebene Spannung angelegt wird;
- eine Positionssignalsendeeinrichtung (32, 40, 401, 410) zum Senden eines Positionssignals als Antwort auf ein Signal, das von der Steuereinheit (401) ausgegeben wird,
- einen elektrischen Doppelschichtkondensator (403) zum Bereitstellen von Leistung für die Steuereinheit (401),
- eine Leistungsübertragungseinrichtung (410), die dafür ausgelegt ist, Leistung von einer Versorgungseinheit (50; 50A; 62, 63; 66; 75) außerhalb des Positionsanzeigers aufzunehmen und den elektrischen Doppelschichtkondensator (403) zu laden,
- einen Kondensator (405), der vorgesehen ist, um die Versorgungsspannung, die zu der Steuereinheit (401) geliefert wird, zu stabilisieren,
- eine Spannungsdetektionseinrichtung (407), die dafür ausgelegt ist, eine Spannung über dem Kondensator (405) zu detektieren und das Detektionsergebnis an die Steuereinheit (401) auszugeben,
- einen Schalter (404), der zwischen dem elektrischen Doppelschichtkondensator (403) und dem stabilisierenden Kondensator (405) vorgesehen ist und so gestaltet ist, dass er von der Steuereinheit (401) als Reaktion auf das Detektionsergebnis ein- und ausgeschaltet wird, so dass die vorgegebene Ansteuerspannung zu der Steuereinheit (401) geliefert wird.

2. Positionsanzeiger (30) nach Anspruch 1, wobei die Leistungsübertxagungseinrichtung dafür ausgelegt ist, ein Wechselstromsignal zu empfangen, das von außen an den Positionsanzeiger (30) geschickt wird, wobei der Positionsanzeiger (30) ferner eine Gleichrichterschaltung zum Gleichrichten des von der Leistungsübertragungseinrichtung empfangenen Wechselstromsignals umfasst, wobei die Leistungsübertragungseinrichtung dafür ausgelegt ist, die Leistung berührungsfrei über das Wechselstromsignal zu empfangen, um den Ladekondensator über die Gleichrichterschaltung zu laden.

3. Positionsanzeiger (30) nach Anspruch 1, ferner eine Licht emittierende Einrichtung umfassend zum Ausgeben eines Hinweises auf einen Aufladungsbedarf als Antwort auf das Ausgangssignal von der Spannungsdetektionseinrichtung.

4. Positionsanzeiger (30) nach Anspruch 1, ferner einen variablen Kondensator umfassend mit einer Kapazität, die als Reaktion auf die Höhe der an einen Kern angelegten Presskraft variiert.

5. Positionseingabegerät, umfassend:
- einen Positionsanzeiger (30) nach einem der Ansprüchen 1 bis 4 zum Senden von Positionssignalen an eine Positionsdetektionsvorrichtung (20; 72) mit einem vorgegebenen Eingabebereich zum Empfangen der Positionssignale vom Positionsanzeiger, einer Anzeigevorrichtung (72) zum Anzeigen von Informationen, die von der Positionsdetektionsvorrichtung detektiert werden,
- wobei der Positionsanzeiger ferner eine Einrichtung (407; 410, 401, 406; 433, 435, 401) zum Signalisieren eines Spannungsabfalls des Kondensators an die Positionsdetektionsvorrichtung umfasst,
- wobei die Anzeigevorrichtung ferner eine Einrichtung umfasst, die einen Nutzers auf Basis des Spannungsabfalls, der von der Positionsdetektionsvorrichtung signalisiert wird, zum Laden oder Wiederaufladen des Kondensators auffordert.

6. Positionseingabevorrichtung nach Anspruch 5, wobei die Anzeigevorrichtung dafür ausgelegt ist,
- als Eingabebereich zu dienen,
- die Positionssignale zu empfangen, während die Erzeugung des Signals (109), das den Nutzer zum Laden oder Wiederaufladen des Kondensators auffordert, auf der Anzeigetafel durchgeführt wird.

## Revendications

1. Indicateur de position (30) comprenant :
- un régulateur (401) auquel est délivrée une tension de fonctionnement prédéterminée ;
- des moyens de transmission d'un signal de position (32, 40, 401, 410) pour la transmission de signaux de position en réponse à un signal de sortie en provenance du régulateur (401),
- un condensateur électrique à double couche (403) pour fournir l'énergie électrique au régulateur (401),
- des moyens de transmission d'énergie électrique (410) qui sont appropriés pour recevoir l'énergie électrique à partir d'une unité de fourniture d'électricité (50 ; 50A ; 62 ; 63 ; 75) extérieure à l'indicateur de position et pour le chargement du condensateur électrique à double couche (403),
- un condensateur (405) prévu pour stabiliser la tension d'alimentation électrique fournie au régulateur (401),
- des moyens de détection de la tension (407) appropriés pour détecter la tension traversant le condensateur (405) et pour fournir la sortie de détection au régulateur (401),
- un commutateur (404) prévu entre ledit condensateur électrique à double couche (403) et ledit condensateur de stabilisation (405) et configuré pour être activé ou désactivé par le régulateur (401) en réponse à la sortie de détection de telle sorte que la tension de commande prédéterminée est appliquée audit régulateur (401).

2. Indicateur de position (30) selon la revendication 1, dans lequel lesdits moyens de transmission de l'énergie électrique sont appropriés pour recevoir un signal CA émis à partir de l'extérieur audit indicateur de position (30), dans lequel ledit indicateur de position (30) comprend en outre un circuit de redressement pour redresser le signal CA reçu par lesdits moyens de transmission de l'énergie électrique, dans lequel lesdits moyens de transmission de 1'énergie électrique sont appropriés pour recevoir l'énergie électrique en l'absence de contact par le signal CA pour charger ledit condensateur de charge par le biais du circuit de redressement.

3. Indicateur de position (30) selon la revendication 1, comprenant en outre des moyens d'émission de lumière pour délivrer la notification que la charge est nécessaire en réponse au signal de sortie en provenance desdits moyens de détection de la tension.

4. Indicateur de position (30) selon la revendication 1, comprenant en outre un condensateur variable ayant une capacité qui varie en réponse à l'amplitude de la force s'exerçant sur un coeur.

5. Appareillage de mise en entrée de position, comprenant
- un indicateur de position (30) selon l'une quelconque des revendications 1 à 4 pour la transmission de signaux de position à un dispositif de détection de la position (20 ; 72) ayant une zone d'entrée prédéterminée pour la réception des signaux de position en provenance de l'indicateur de position, un dispositif d'affichage (72) pour afficher l'information détectée par ledit dispositif de détection de la position,
- l'indicateur de position comprenant en outre des moyens (407 ; 410 ; 401 ; 406 ; 433 ; 435 ; 401) pour signaler une chute de tension dudit condensateur au dispositif de détection de la position,
- le dispositif d'affichage comprenant en outre des moyens pour inviter un utilisateur ce qui concerne la charge ou la recharge dudit condensateur sur la base de la chute de tension qui est signalée à partir du dispositif de détection de la position.

6. Appareillage de mise en entrée de position selon la revendication 5, dans lequel ledit dispositif d'affichage est adapté
- pour fonctionner comme ladite zone d'entrée,
- pour recevoir les signaux de position pendant que la création du signal (109) invitant l'utilisateur à ce que la charge ou la recharge soit réalisée sur le panneau d'affichage.
